# EUROPÄISCHE PATENTSCHRIFT

(11) **EP 1 384 018 B1**
(45) Veröffentlichungstag und Bekanntmachung des Hinweises auf die Patenterteilung: **28.07.2004**
(21) Anmeldenummer: 02735314.3
(22) Anmeldetag: 27.04.2002
(51) Int. Cl.: F16H 15/38

(54) **STUFENLOSES REIBRADGETRIEBE**
CONTINUOUSLY VARIABLE TOROIDAL GEAR
BOITE DE VITESSES TOROIDALE VARIABLE

(30) Priorität: 03.05.2001 DE 10121489
(43) Veröffentlichungstag der Anmeldung: 28.01.2004
(73) Patentinhaber: ZF FRIEDRICHSHAFEN AG, 88038 Friedrichshafen (DE)
(72) Erfinder: WAFZIG, Jürgen, D-88097 Eriskirch (DE)
(86) Internationale Anmeldenummer: PCT/EP2002/004687
(87) Internationale Veröffentlichungsnummer: WO 2002/090798

(56) Entgegenhaltungen:
- DE-A- 19 947 851
- US-A- 4 086 820
- US-A- 4 934 206
- PATENT ABSTRACTS OF JAPAN vol. 1996, no. 02, 29. Februar 1996 (1996-02-29) & JP 07 253145 A (NISSAN MOTOR CO LTD), 3. Oktober 1995 (1995-10-03)

## Beschreibung

Die vorliegende Erfindung betrifft ein stufenloses Reibradgetriebe nach dem Oberbegriff des Anspruchs 1.

Ein derartiges stufenloses Reibradgetriebe weist üblicherweise koaxial zu einer gemeinsamen Welle angeordnete Eingangs- und Ausgangsscheiben auf, die paarweise zueinander angeordnet sind und deren Innenflächen toroidförmig ausgestaltet sind, sowie zwischen den Paaren von Eingangsund Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragende Drehmoment auf die Ausgangsscheibe durch reibschlüssigen Kontakt, wobei die Drehzahl der Reibräder um so höher ist, je größer der Abstand zwischen ihrer Berührungsstelle mit der Eingangsscheibe und der Drehachse ist. Die Drehzahl der Ausgangsscheiben hingegen ist um so größer, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder jeweils an einem Träger gelagert, der über eine Verschwenkeinrichtung ansteuerbar ist.

Ein derartiges stufenloses Reibradgetriebe ist im einzelnen in der DE 197 54 725 der Anmelderin und in JP-A-0 725 3145 (Enthält die Merkmale des Oberbegriffs des Anspruchs 1) beschrieben. Dieses Getriebe enthält zwei Getriebeeinheiten, die koaxial zur Eingangswelle angeordnet sind, wobei jede Getriebeeinheit eine Eingangsscheibe und eine Ausgangsscheibe aufweist, zwischen denen jeweils zwei Reibräder angeordnet sind und wobei jedes Reibrad an einem schwenkbaren Träger befestigt ist. Sowohl Eingangs- als auch Ausgangsscheiben sind auf einer Drehmomentwelle gelagert, die geringfügig in Axialrichtung relativ zur Eingangswelle verschiebbar ist. Die Eingangsscheibe der einen Getriebeeinheit ist drehfest mit der Drehmomentwelle verbunden, jedoch axial gleitend auf ihr gelagert. Auch die Eingangsscheibe der anderen Getriebeeinheit ist drehfest durch eine Mitnahmeverzahnung mit der Drehmomentwelle verbunden. Die beiden Ausgangsscheiben der beiden Getriebeeinheiten sind spiegelsymmetrisch zueinander und nebeneinander im Getriebe vorgesehen und auf einer gemeinsamen Buchse angeordnet, sodass ein Drehmoment, das von der einen Eingangsscheibe der zugehörigen Ausgangsscheibe und ein Drehmoment, das von der anderen Eingangsscheibe deren zugehörigen Ausgangsscheibe übertragen wird, von den beiden drehfest mit der Buchse verbundenen Ausgangsscheiben einem Zahnrad übertragen wird, welches mit einem Zahnrad einer Ausgangswelle kämmt. Eine rollenförmige Anpreßeinrichtung beaufschlagt eine der Eingangsscheiben, die in Axialrichtung verschiebbar auf der Eingangswelle gelagert sowie drehfest mit ihr verbunden ist.

Bei diesen bekannten stufenlosen Reibradgetrieben erfolgt üblicherweise die Verstellung der Übersetzung durch Verschiebung der Reibräder tangential zur Getriebeachse, wobei jedoch Schwenkkräfte von den Eingangs- und Ausgangsscheiben auf das dazwischen angeordnete Reibrad einwirken, da letztere zur Momentenübertragung an das Reibrad gepreßt werden müssen. Das Reibrad ist bei den herkömmlichen stufenlosen Reibradgetrieben derart in jeder Getriebeeinheit angeordnet, dass seine Schwenkachse im Mittelpunkt des durch die zugehörigen Eingangs- und Ausgangsscheiben gebildeten Torus angeordnet ist. In den Kontaktpunkten des Reibrades mit der zugehörigen Eingangsscheibe und Ausgangsscheibe werden dabei sogenannte Normalkräfte bei der Verstellung der Übersetzung hervorgerufen.

Um zu verhindern, dass bei ungleichen während der Übersetzungsverstellung auftretenden Normalkräften das am Reibrad auftretende dadurch bedingte Drehmoment eine unerwünschte Veränderung der Übersetzung des Getriebes hervorruft, wurde bereits in der DE 198 26 057 der Anmelderin vorgeschlagen, eine mögliche Differenz der Normalkräfte durch Erzeugung einer Steuerkraft zu kompensieren, wobei bei axial gehaltenem Reibrad diese Steuerkraft, die zur Verdrehung des Reibrades führt, an einer der beiden zugehörigen Scheiben aufgebracht werden kann, während bei axialer Fixierung einer der Scheiben diese Steuerkraft auf das Reibrad einwirkt.

Es wurde auch bereits vorgeschlagen, die Reibräder in einem stufenlosen Reibradgetriebe durch zwei Verbindungsstangen abzustützen, welche den auftretenden Reaktionskräften entgegenwirken. Die Schwenkbewegung der Reibräder wird dabei durch Wälzlager ermöglicht; diese Ausgestaltung bringt jedoch noch den Nachteil eines hohen Gewichtes des Reibradgetriebes sowie einer fehlenden Kopplung der Schwenkbewegungen der beiden in einer Getriebeeinheit angeordneten Träger für die Reibräder mit sich.

Bei diesen bekannten Reibradgetrieben wird üblicherweise nur der Verdrehwinkel eines Trägers angesteuert, während die anderen Träger mit dem identischen Druck beaufschlagt werden.

Aufgabe der vorliegenden Erfindung ist es, ein Reibradgetriebe dahingehend auszugestalten, dass der Verdrehwinkel zwischen den Trägern für die Reibräder frei einstellbar ist, um einerseits bei den (schnellen) Verstellvorgängen eine effektive Synchronisierung zwischen den Trägern zu erzielen und andererseits den Trägern und damit den Reibrädern das erforderliche Spiel, d. h. den Freigang, zu ermöglichen, damit sich die Träger entsprechend den Toleranzen und der Lastverteilung kräftefrei einstellen können und wirkungsgradoptimal laufen können.

Die Lösung dieser Aufgabe erfolgt mit den im kennzeichnenden Teil des Anspruchs 1 angegebenen Merkmalen; vorteilhafte Ausgestaltungen sind in den Unteransprüchen beschrieben.

Erfindungsgemäß ist also vorgesehen, dass die beiden Träger einer jeden Getriebeeinheit über zwei unter je einem Winkel zur Längsachse des Reibradgetriebes verlaufende Endlosketten derart miteinander verbunden sind, dass die eine Kette den ersten (vorderen) Träger der ersten Getriebeeinheit und den zweiten (hinteren) Träger der zweiten Getriebeeinheit umschlingt und dass die andere Kette den zweiten (vorderen) Träger der ersten Getriebeeinheit und den ersten (hinteren) Träger der zweiten Getriebeeinheit umschlingt, sodass die beiden Endlosketten sich zwischen den vier Trägern kreuzen und dass jeder Endloskette eine Ansteuereinrichtung zugeordnet ist, die innerhalb oder außerhalb der Kette angeordnet ist und die sie mit einer einstellbaren Kraft beaufschlagt.

Vorteilhafterweise sind die Ketten mit ihren jeweils zugeordneten Trägern axial verschiebbar, jedoch drehmomentstarr verbunden. Die axial verschiebbare und drehmomentstarre Verbindung kann vorzugsweise eine Kugelmitnahme am Träger sein.

Vorzugsweise erfolgt die axiale Verschiebung der drehmomentstarr mit den Trägern verbundenen Ketten durch Einwirkung auf die Querelastizität der Kette.

Die außerhalb der Endloskette angeordnete und mit dieser in Wirkverbindung stehende Ansteuereinrichtung ist vorzugsweise ein Schwenkhebel, dessen eines Ende drehbar und geringfügig verschiebbar gelagert ist und dessen anderes Ende, das die Außenseite der Endloskette mit einer einstellbaren Kraft beaufschlagt, mit einem an die Abmessungen der einzelnen Kettenglieder angepaßten frei drehbar aufgehängten Zahnrad verbunden ist.

Die Kraft zur Verstellung des Schwenkhebels zum Ausgleich des Trägerhubes kann entweder hydraulisch, mechanisch, elektrisch oder pneumatisch aufgebracht werden.

Mit dem erfindungsgemäß ausgestalteten Reibradgetriebe wird also der Vorteil einer variablen Verstellung und Synchronisation jeweils zweier zwei getrennten Getriebeeinheiten zugeordneter Träger über eine einstellbare Kettenvorspannung bzw. -entspannung durch die Ansteuereinrichtung erzielt. Hierbei sind die beiden Ketten über eine Übersetzungsansteuereinrichtung 52 synchronisiert. Diese weist im Wesentlichen eine Achse mit zwei Zahnrädern auf zwei unterschiedlichen Ebenen auf.

Im folgenden wird die Erfindung anhand der Zeichnung näher erläutert, in der ein vorteilhaftes Ausführungsbeispiel dargestellt ist.
Es zeigen:
- Fig. 1: schematisch eine Ansicht eines stufenlosen Reibradgetriebes mit der Anordnung der Endlosketten und
- Fig. 2: ein Ausführungsbeispiel einer Ansteuereinrichtung für die Endloskette.

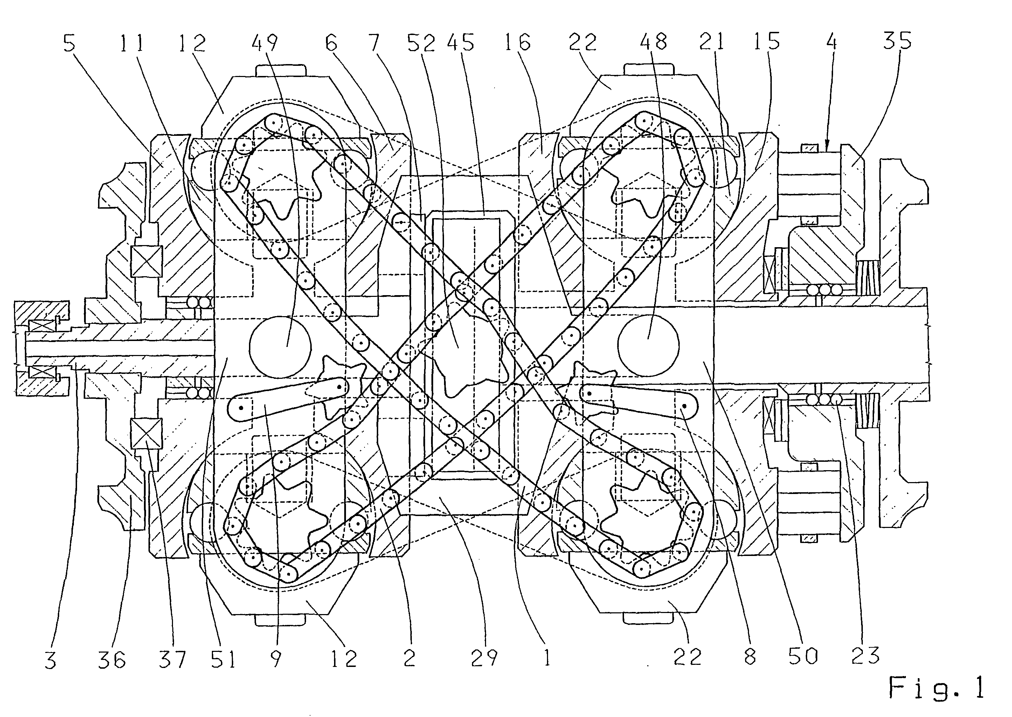

Das schematisch in Fig. 1 dargestellte stufenlose Reibradgetriebe mit zwei Getriebeeinheiten entspricht in seinem Aufbau demjenigen, das in der DE 197 36 830 der Anmelderin beispielsweise beschrieben ist. Die Eingangswelle 3 des Reibradgetriebes ist mit einem (nicht darstellten) Anfahrelement, z. B. einem Drehmomentwandler oder einer naßlaufenden Anfahrkupplung einer Antriebsmaschine eines Kraftfahrzeuges verbunden. Koaxial zur Eingangswelle 3 sind zwei Getriebeeinheiten angeordnet, wobei die eine Getriebeeinheit eine Eingangsscheibe 5 und eine Ausgangsscheibe 6 aufweist, deren einander zugewandte Oberflächen toroidförmig ausgestaltet sind. Die andere Getriebeeinheit weist eine Eingangsscheibe 15 und eine ihr gegenüber angeordnete Ausgangsscheibe 16 auf, deren einander zugewandte Oberflächen ebenfalls toroidförmig ausgestaltet sind. In den beiden Getriebeeinheiten sind jeweils zwei Reibräder 11, 21 vorgesehen, die an schwenkbaren Trägern 12 und 22 befestigt sind, sodass sie bezüglich der Längsachse der Eingangswelle 3 verschwenkt werden können. Die Reibräder 11, 21 stehen in reibschlüssigem Kontakt mit den beiden ihnen zugewandten Oberflächen der Eingangsscheiben 5, 15 und der Ausgangsscheiben 6, 16, wobei die Reibräder einer Getriebeeinheit symmetrisch zur Achse der Eingangswelle 3 angeordnet sind.

Mit 4 ist die übliche rollenförmige Anpreßeinrichtung bezeichnet, mit 7 ein Lagerstützglied, mit 23 ein Lager, mit 29 ein Rahmenbügel, mit 35 eine mit einer Kurvenbahn versehene Scheibe, mit 36 eine Axialscheibe, mit 37 ein Lager, mit 45 eine Aussparung, mit 48 und 49 zwei Zapfen und mit 50 und 51 zwei Querjoche.

Werden nun die Reibräder 11, 21 bezüglich der Längsachse der Eingangswelle geneigt, so verschieben sich die Berührungspunkte des Umfangs der Reibräder 11, 21 entlang der toroidförmigen Oberflächen sowohl der Eingangsscheiben als auch der Ausgangsscheiben, wodurch das Übersetzungsverhältnis zwischen einer Eingangs- und einer Ausgangsscheibe kontinuierlich, d. h. stufenlos, einstellbar ist.

Um nun den Verdrehwinkel zwischen den Trägern frei einstellen zu können, um einerseits bei schnellen Verstellvorgängen eine effektive Synchronisierung zwischen den Trägern und damit den Reibrädern zu gewährleisten, und andererseits den Trägern und damit auch den Reibrädern das notwendige Spiel zu ermöglichen, damit sich die Träger entsprechend den Fertigungstoleranzen und der Lastverteilung kräftefrei einstellen können und wirkungsgradoptimal laufen, sind nun erfindungsgemäß zwei Endlosketten 1, 2 vorgesehen, die jeweils diagonal vom linken vorderen Träger 12 zum rechten hinteren Träger 22 und vom rechten vorderen Träger 22 zum linken hinteren Träger 12 gemäß der Darstellung in Fig. 1 verlaufen und zwar dergestalt, dass jede Kette die beiden ihr zugeordneten Träger umschlingt, wobei sie sich zwischen den Trägerpaaren kreuzen, jedoch nicht berühren. Die beiden Ketten 1, 2 sind untereinander über die Übersetzungsansteuereinrichtung 52 synchronisiert; die Anbindung der Endlosketten 1, 2 an die Träger 12, 22 kann über eine axial verschiebbare, aber drehmomentstarre Verbindung, insbesondere über eine Kugelmitnahme, erfolgen. Besonders kostengünstig und vorteilhaft ist es, die Anbindung der Endlosketten 1, 2 an die Träger 12, 22 starr vorzunehmen und den Ausgleich des Trägerhubes (der üblicherweise unter 5 mm liegt) über die Querelastizität der Endlosketten bzw. der einzelnen Kettenglieder vorzunehmen. In der Figur sind die Ketten in einem nicht vollständig verspannten Zustand eingezeichnet, um die Darstellung übersichtlich zu gestalten; die eingezeichneten Zahnräder greifen jedoch erfindungsgemäß in die Kettenglieder ein.

Mit 8, 9 sind zwei Ansteuereinrichtungen bezeichnet, die außerhalb der zugehörigen Endlosketten 1, 2 angeordnet sind und zwar derart, dass sie die Außenseite der zugehörigen Endloskette 1, 2 mit einer einstellbaren Kraft beaufschlagen. Je nach der Schwenkbewegung der Ansteuereinrichtung wird die entsprechende Endloskette mehr oder weniger vorgespannt, wodurch das Verdrehspiel zwischen den Trägern eingestellt werden kann. Die Ansteuereinrichtungen können auch innerhalb der Endlosketten angeordnet sein. Im Rahmen einer Variante der vorliegenden Erfindung sind pro Kette zwei oder mehrere Ansteuereinrichtungen vorgesehen.

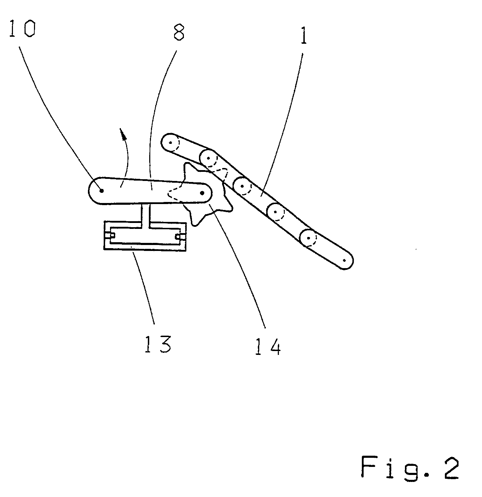

Fig. 2 zeigt ein Ausführungsbeispiel einer Ansteuereinrichtung 8, die vorteilhafterweise aus einem an einer Drehachse 10 gelagerten Schwenkhebel besteht, dessen anderes der Endloskette 1 zugeordnetes Ende mit einem frei drehbar laufenden, in die Kettenglieder eingreifenden und an diese angepaßten Zahnrad 14 versehen ist. Der Hebel kann hierbei hydraulisch verstellt werden, wie es schematisch durch den Hydraulikkolben 13 angedeutet ist. Der in der Figur eingezeichnete Pfeil veranschaulicht die Schwenkbewegung. Es ist genauso gut möglich, den Schwenkhebel 10 mechanisch mit einer vorgegebenen Kraft zu verstellen, um so die Vorspannung der Kette 1 einzustellen. Je höher diese Vorspannung der Kette ist, desto geringer ist das Verdrehspiel zwischen den zugehörigen Trägern.

### Bezugszeichen

- 1: Endloskette
- 2: Endloskette
- 3: Eingangswelle
- 4: Anpreßeinrichtung
- 5: Eingangsscheibe
- 6: Ausgangsscheibe
- 7: Lagerstützglied
- 8: Ansteuereinrichtung
- 9: Ansteuereinrichtung
- 10: Drehachse
- 11: Reibrad
- 12: Träger
- 13: Hydraulikkolben
- 14: Zahnrad
- 15: Eingangsscheibe
- 16: Ausgangsscheibe
- 21: Reibrad
- 22: Träger
- 23: Lager
- 29: Rahmenbügel
- 35: Kurvenbahnscheibe
- 36: Axialscheibe
- 37: Lager
- 45: Aussparung
- 48: Zapfen
- 49: Zapfen
- 50: Querjoch
- 51: Querjoch
- 52: Übersetzungsansteuereinrichtung

## Patentansprüche

1. Stufenloses Reibradgetriebe mit:
- einer Eingangswelle und zwei Getriebeeinheiten jeweils bestehend aus einer koaxial zur Eingangswelle angeordneten Eingangsscheibe (5, 15) mit toroidförmiger Innenfläche, einer koaxial zur Eingangswelle angeordneten Ausgangsscheibe (6, 16) mit toroidförmiger Innenfläche, wobei je eine Eingangsscheibe und eine Ausgangsscheibe in einer Getriebeeinheit ein Paar bilden und die beiden Ausgangsscheiben spiegelsymmetrisch zueinander und nebeneinander angeordnet sind,
- mehreren Reibrädern (11, 21), die zwischen den Innenflächen der Paare aus Eingangsscheiben und Ausgangsscheiben verschwenkbar angeordnet sind zur Übertragung eines Drehmoment von der Eingangsscheibe auf die zugehörige Ausgangsscheibe,
- einem Träger (12, 22) für jedes Reibrad (11, 21),
- eine Anpreßanordnung (4) für die drehmomentabhängige Axialkrafterzeugung, um die Eingangsscheiben in Richtung Ausgangsscheiben zu beaufschlagen und
- einer Verschwenkeinrichtung für die Träger der Reibräder,
**dadurch gekennzeichnet, dass** die Träger der beiden Getriebeeinheiten über zwei unter je einem Winkel zur Längsachse des stufenlosen Reibradgetriebes verlaufenden Endlosketten (1, 2) derart miteinander verbunden sind, dass die eine Kette (2) den ersten Träger (12) der ersten Getriebeeinheit und den zweiten Träger (22) der zweiten Getriebeeinheit umschlingt und dass die andere Kette (1) den zweiten Träger (12) der ersten Getriebeeinheit und den ersten Träger (22) der zweiten Getriebeeinheit umschlingt, sodass die beiden Endlosketten (1, 2) sich zwischen den Trägern kreuzen jedoch nicht berühren und dass jeder Endloskette (1, 2) mindestens eine Ansteuereinrichtung (8, 9) zugeordnet ist, die innerhalb oder außerhalb der Kette angeordnet ist und die sie mit einer einstellbaren Kraft beaufschlagt, wobei die Endlosketten (1, 2) miteinander synchronisiert sind.

2. Stufenloses Reibradgetriebe nach Anspruch 1, **dadurch gekennzeichnet, dass** die Endlosketten (1, 2) mit den jeweils zugeordneten Trägern (12, 22) axial verschiebbar jedoch drehmomentstarr verbunden sind.

3. Stufenloses Reibradgetriebe nach Anspruch 2, **dadurch gekennzeichnet, dass** die axial verschiebbare und drehmomentstarre Verbindung eine Kugelmitnahme am Träger (12, 22) ist.

4. Stufenloses Reibradgetriebe nach einem der vorhergehenden Ansprüche, **dadurch gekennzeichnet, dass** die Endlosketten (1, 2) mit den jeweils zugeordneten Trägern (12, 22) drehmomentstarr verbunden sind und dass die axiale Verschiebung durch die Querelastizität der Endloskette (1, 2) erfolgt.

5. Stufenloses Reibradgetriebe nach einem der vorhergehenden Ansprüche, **dadurch gekennzeichnet, dass** die Ansteuereinrichtung (8, 9) aus einem Schwenkhebel besteht, dessen eines Ende an einer Achse (10) drehbar gelagert ist und dessen anderes Ende, das die Außenseite der Endloskette (1, 2) mit einer vorgegebenen Kraft beaufschlagt, mit einem frei am Schwenkhebel drehbar angeordneten in die Endloskette (1) eingreifenden Zahnrad (14) versehen ist.

6. Stufenloses Reibradgetriebe nach einem der vorhergehenden Ansprüche, **dadurch gekennzeichnet, dass** die Ansteuereinrichtung (8, 9) über einen Hydraulikkolben (13) verschwenkt wird.

7. Stufenloses Reibradgetriebe nach einem der Ansprüche 1 bis 5, **dadurch gekennzeichnet, dass** die Ansteuereinrichtung (8, 9) über eine mechanische Verstelleinrichtung verschwenkt wird.

8. Stufenloses Reibradgetriebe nach einem der Ansprüche 1 bis 5 **dadurch gekennzeichnet, dass** die Ansteuereinrichtung (8, 9) über eine elektrische Verstelleinrichtung verschwenkt wird.

9. Stufenloses Reibradgetriebe nach einem der Ansprüche 1 bis 5, **dadurch gekennzeichnet, dass** die Ansteuereinrichtung (8, 9) über eine elektrischemechanische Verstelleinrichtung verschwenkt wird.

10. Stufenloses Reibradgetriebe nach einem der Ansprüche 1 bis 5, **dadurch gekennzeichnet, dass** die Ansteuereinrichtung (8, 9) über eine pneumatische Verstelleinrichtung verschwenkt wird.

11. Stufenloses Reibradgetriebe nach einem der vorhergehenden Ansprüche, **dadurch gekennzeichnet, dass** die Ansteuereinrichtung (8, 9) innerhalb der Kette angeordnet ist.

12. Stufenloses Reibradgetriebe nach einem der vorhergehenden Ansprüche, **dadurch gekennzeichnet, dass** die Endlosketten (1, 2) miteinander über eine Übersetzungsansteuereinrichtung (52) synchronisiert werden.

13. Stufenloses Reibradgetriebe nach Anspruch 12, **dadurch gekennzeichnet, dass** die Übersetzungsansteuereinrichtung (52) eine Achse mit zwei Zahnrädern auf zwei verschiedenen Ebenen enthält.

## Claims

1. Infinitely variable friction gear having:
- an input shaft and two gear units each comprising an input disc (5, 15) disposed coaxially with the input shaft and having a toroidal inner surface, an output disc (6, 16) disposed coaxially with the input shaft and having a toroidal inner surface, wherein in each gear unit one input disc and one output disc form a pair and the two output discs are disposed mirror-symmetrically relative to one another and side by side,
- a plurality of friction wheels (11, 21), which are pivotally disposed between the inner surfaces of the pairs of input discs and output discs for transmitting a torque from the input disc to the associated output disc,
- a carrier (12, 22) for each friction wheel (11, 21)
- a contact pressure arrangement (4) for generating the torque-dependent axial force for loading the input discs towards the output discs and
- a swivelling device for the carriers of the friction wheels,
**characterized in that** by means of two endless chains (1, 2) running each at an angle to the longitudinal axis of the infinitely variable friction gear the carriers of the two gear units are connected to one another in such a way that the one chain (2) is wrapped around the first carrier (12) of the first gear unit and the second carrier (22) of the second gear unit and that the other chain (1) is wrapped around the second carrier (12) of the first gear unit and the first carrier (22) of the second gear unit, so that the two endless chains (1, 2) cross but do not touch one another between the carriers and that there is associated with each endless chain (1, 2) at least one control device (8, 9), which is disposed inside or outside of the chain and loads the chain with an adjustable force, wherein the endless chains (1, 2) are synchronized with one another.

2. Infinitely variable friction gear according to claim 1, **characterized in that** the endless chains (1, 2) are connected to the respective associated carriers (12, 22) in an axially displaceable but torsionally rigid manner.

3. Infinitely variable friction gear according to claim 2, **characterized in that** the axially displaceable and torsionally rigid connection is a ball driver on the carrier (12, 22).

4. Infinitely variable friction gear according to one of the preceding claims, **characterized in that** the endless chains (1, 2) are connected in a torsionally rigid manner to the respective associated carriers (12, 22), and that the axial displacement is effected by means of the transverse elasticity of the endless chain (1, 2).

5. Infinitely variable friction gear according to one of the preceding claims, **characterized in that** the control device (8, 9) comprises a tilting lever, of which one end is rotatably mounted on a pin (10) and the other end, which loads the outside of the endless chain (1, 2) with a preset force, is provided with a gear wheel (14), which is disposed in a freely rotatable manner on the tilting lever and engages into the endless chain (1).

6. Infinitely variable friction gear according to one of the preceding claims, **characterized in that** the control device (8, 9) is tilted by means of a hydraulic piston (13).

7. Infinitely variable friction gear according to one of claims 1 to 5, **characterized in that** the control device (8, 9) is tilted by means of a mechanical adjustment device.

8. Infinitely variable friction gear according to one of claims 1 to 5, **characterized in that** the control device (8, 9) is tilted by means of an electrical adjustment device.

9. Infinitely variable friction gear according to one of claims 1 to 5, **characterized in that** the control device (8, 9) is tilted by means of an electromechanical adjustment device.

10. Infinitely variable friction gear according to one of claims 1 to 5, **characterized in that** the control device (8, 9) is tilted by means of a pneumatic adjustment device.

11. Infinitely variable friction gear according to one of the preceding claims, **characterized in that** the control device (8, 9) is disposed inside the chain.

12. Infinitely variable friction gear according to one of the preceding claims, **characterized in that** the endless chains (1, 2) are synchronized with one another by means of a ratio control device (52).

13. Infinitely variable friction gear according to claim 12, **characterized in that** the ratio control device (52) comprises an axle with two gear wheels on two different planes.

## Revendications

1. Transmission à roues de friction avec :
- un arbre d'entrée et deux unités de transmission constituées chacune d'un disque d'entrée (5, 15) coaxial à l'arbre d'entrée avec des surfaces internes toroïdales, un disque de sortie (6, 16) coaxial à l'arbre d'entrée avec des surfaces internes toroïdales, un disque d'entrée et un disque de sortie constituant une paire et les deux disques de sortie étant disposés en symétrie à miroir entre eux et l'un à côté de l'autre,
- plusieurs roues de friction (11, 21) disposées de manière pivotante entre les surfaces internes des paires de disques d'entrée et de disques de sortie, pour la transmission d'un couple de rotation du disque d'entrée vers le disque de sortie correspondant,
- un support (12, 22) pour chaque roue de friction (11, 21),
- un dispositif de compression (4) pour la production d'une force axiale en fonction d'un couple de rotation, afin de déplacer les disques d'entrée en direction des disques de sortie et
- un dispositif de pivotement pour les supports des roues de friction,
**caractérisée en ce que** les supports des deux unités de transmission sont reliés entre eux par l'intermédiaire de deux chaînes sans fin (1, 2) formant un angle avec l'axe longitudinal de la transmission en continu à roues de friction, **en ce que** l'une des chaînes (2) entoure le premier support (12) de la première unité de transmission et le deuxième support (22) de la deuxième unité de transmission et **en ce que** l'autre chaîne (1) entoure le deuxième support (12) de la première unité de transmission et le premier support (22) de la deuxième unité de transmission, de façon à ce que les deux chaînes sans fin (1, 2) se croisent entre les supports mais ne se touchent pas, et **en ce que** chaque chaîne sans fin (1, 2) est pourvue d'au moins un dispositif de commande (8, 9) disposée à l'intérieur ou à l'extérieur de la chaîne et qui la soumet à une force réglable, les chaînes sans fin (1, 2) étant synchronisées entre elles.

2. Transmission continue à roues de friction selon la revendication 1, **caractérisée en ce que** les chaînes sans fin (1, 2) sont reliées avec les supports (12, 22) correspondants de manière mobile axialement mais immobile en ce qui concerne le couple de rotation.

3. Transmission continue à roues de friction selon la revendication 2, **caractérisée en ce que** la liaison mobile axialement et immobile en ce qui concerne le couple de rotation est un entraînement à billes sur le support (12, 22).

4. Transmission continue à roues de friction selon l'une des revendications précédentes, **caractérisée en ce que** les chaînes sans fin (1, 2) sont reliées de manière immobile en ce qui concerne le couple de rotation avec les supports (12, 22) correspondants et **en ce que** le déplacement axial est réalisé à l'aide de l'élasticité transversale des chaînes sans fin (1, 2).

5. Transmission continue à roues de friction selon l'une des revendications précédentes, **caractérisée en ce que** le dispositif de commande (8, 9) est constitué d'un levier de pivotement dont une extrémité est logée de manière rotative sur un axe (10) et dont l'autre extrémité, qui exerce sur le côté extérieur de la chaîne sans fin (1, 2) une force prédéterminée, est pourvue d'une roue dentée (14) disposée de manière libre en rotation sur le levier de pivotement et s'engrenant dans la chaîne sans fin (1).

6. Transmission continue à roues de friction selon l'une des revendications précédentes, **caractérisée en ce que** le dispositif de commande (8, 9) est pivoté à l'aide d'un piston hydraulique (13).

7. Transmission continue à roues de friction selon l'une des revendications 1 à 5, **caractérisée en ce que** le dispositif de commande (8, 9) est pivoté à l'aide d'un dispositif de réglage mécanique.

8. Transmission continue à roues de friction selon l'une des revendications 1 à 5, **caractérisée en ce que** le dispositif de commande (8, 9) est pivoté à l'aide d'un dispositif de réglage électrique.

9. Transmission continue à roues de friction selon l'une des revendications 1 à 5, **caractérisée en ce que** le dispositif de commande (8, 9) est pivoté à l'aide d'un dispositif de réglage électromécanique.

10. Transmission continue à roues de friction selon l'une des revendications 1 à 5, **caractérisée en ce que** le dispositif de commande (8, 9) est pivoté à l'aide d'un dispositif de réglage pneumatique.

11. Transmission continue à roues de friction selon l'une des revendications précédentes, **caractérisée en ce que** le dispositif de commande (8, 9) est disposé à l'intérieur de la chaîne.

12. Transmission continue à roues de friction selon l'une des revendications précédentes, **caractérisée en ce que** les chaînes sans fin (1, 2) sont synchronisées entre elles par l'intermédiaire d'un dispositif de commande à démultiplication (52).

13. Transmission continue à roues de friction selon la revendication 12, **caractérisée en ce que** le dispositif de commande à démultiplication (52) contient un axe avec deux roues dentées sur deux plans différents.
